(19) Europäisches Patentamt
European Patent Office
Office européen des brevets

(11) **EP 3 070 651 A1**

(12) **EUROPEAN PATENT APPLICATION**

(43) Date of publication:
**21.09.2016 Bulletin 2016/38**

(51) Int Cl.:
**G06Q 10/04** (2012.01)     **G06Q 10/06** (2012.01)
**G06Q 10/10** (2012.01)

(21) Application number: **16150694.4**

(22) Date of filing: **08.01.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **17.03.2015   JP 2015053728**

(71) Applicant: **Hitachi, Ltd.**
**Chiyoda-ku**
**Tokyo 100-8280 (JP)**

(72) Inventors:
• **FUJIWARA, Masayasu**
  **Chiyoda-ku,, Tokyo 1008280 (JP)**

• **SUZUKI, Osamu**
  **Chiyoda-ku,, Tokyo 1008280 (JP)**
• **MIYAUCHI, Tsutomu**
  **Chiyoda-ku,, Tokyo 1008280 (JP)**
• **SUZUKI, Montonari**
  **Chiyoda-ku,, Tokyo 1008280 (JP)**
• **MUTO, Kazuo**
  **Chiyoda-ku,, Tokyo 1008280 (JP)**
• **NING, Rui**
  **Chiyoda-ku,, Tokyo 1008280 (JP)**

(74) Representative: **Gill, Stephen Charles et al**
**Mewburn Ellis LLP**
**City Tower**
**40 Basinghall Street**
**London EC2V 5DE (GB)**

(54) **TRAFFIC SYSTEM SIMULATOR AND TRAFFIC SYSTEM SIMULATION METHOD**

(57)     If at least positions of two end-stations of a route of the route-type traffic system are designated, an equipment configuration calculation unit calculates an equipment configuration of the route-type traffic system, in which a route is installed between two end-stations based on the map data, stations are installed at predetermined intervals on the route, based on the basic equipment data, and substations are installed at predetermined intervals in the vicinity of the route, and calculates a running schedule available in the route-type traffic system. A traffic situation calculation unit calculates a movement situation of the movement unit varying with an elapse of time, based on the movement demand data, for a movement of a movement unit on a road by a road-type moving section of at least one of walking and riding, and movement of the movement unit on the route by the route-type traffic system in the equipment configuration and the running schedule. An introduction effect calculation unit calculates an initial introduction cost required for introducing the route-type traffic system, based on the equipment configuration.

**Description**

BACKGROUND OF THE INVENTION

1. FIELD OF THE INVENTION

The present invention relates to a technique for supporting the introduction of a traffic system.

2. BACKGROUND ART

JP-A-2012-146256 discloses a traffic volume simulation apparatus which simulates traveling of a vehicle model in a road network model, and traveling of a track-based transportation model in a route network model.

When considering the introduction of a traffic system, whether or not to introduce a system and which system configuration is to be employed may be determined, while evaluating the benefits of traffic system introduction, based on traffic volume and other simulation results.

However, the traffic volume simulation apparatus of JP-A-2012-146256 is not necessarily suitable for such work. The traffic volume simulation apparatus of JP-A-2012-146256 prepares in advance respective models such as the road network model, the vehicle model, the route network model, and the track-based transportation model, which are described above, which enable a traffic volume simulation. However, since each of these models is configured of various elements that are intricately related to each other, preparing the various models is not an easy job.

SUMMARY OF THE INVENTION

An object of the present invention is to provide a technique that enables a simulation suitable for consideration of traffic system introduction.

In a first aspect, the present invention provides a traffic system simulator according to Claim 1, 8, 11 or 14.

In a second aspect, the present invention provides a traffic system simulation method according to Claim 16, 17, 18 or 19. Accordingly, the method of the second aspect corresponds to the simulator of the first aspect. Optional features of the simulator of the first aspect thus pertain also to the method of the second aspect.

Further aspects of the present invention provide: a computer program comprising code which, when run on a computer, causes the computer to perform the method of the second aspect; and a computer readable medium storing a computer program comprising code which, when run on a computer, causes the computer to perform the method of the second aspect.

According to the present invention, if only the positions of two end-stations are designated, the equipment configuration of a route-type traffic system to be introduced between the two end-stations, the traffic state after the introduction, and an initial introduction cost required for the introduction are calculated, such that it is possible to easily predict the introduction effect of the route-type traffic system.

BRIEF DESCRIPTION OF THE DRAWINGS

Fig. 1 is a block diagram of a traffic system simulator according to a present embodiment.
Fig. 2A is a diagram illustrating a series of states of an introduction simulation of a railway system simulator according to the present embodiment.
Fig. 2B is a diagram illustrating a series of states of an introduction simulation of a railway system simulator according to the present embodiment.
Fig. 2C is a diagram illustrating a series of states of an introduction simulation of a railway system simulator according to the present embodiment.
Fig. 2D is a diagram illustrating a series of states of an introduction simulation of a railway system simulator according to the present embodiment.
Fig. 3 is a flowchart illustrating an overall process of the railway system simulator according to the present embodiment.
Fig. 4 is a flowchart illustrating an equipment configuration calculation process of the railway system simulator according to the present embodiment.
Fig. 5 is a flowchart illustrating a traffic situation calculation process of the railway system simulator according to the present embodiment.
Fig. 6 is a flowchart illustrating an introduction effect calculation process of the railway system simulator according to the present embodiment.
Fig. 7 is a flowchart illustrating a station providing process of the railway system simulator according to the present embodiment.
Fig. 8 is a flowchart illustrating a substation providing process of the railway system simulator according to the present embodiment.
Fig. 9A is a diagram illustrating a screen display example when a series of simulations are performed by the railway system simulator according to the present embodiment.
Fig. 9B is a diagram illustrating a screen display example when a series of simulations are performed by the railway system simulator according to the present embodiment.
Fig. 9C is a diagram illustrating a screen display example when a series of simulations are performed by the railway system simulator according to the present embodiment.
Fig. 9D is a diagram illustrating a screen display example when a series of simulations are performed by the railway system simulator according to the present embodiment.

Fig. 9E is a diagram illustrating a screen display example when a series of simulations are performed by the railway system simulator according to the present embodiment.

Fig. 9F is a diagram illustrating a screen display example when a series of simulations are performed by the railway system simulator according to the present embodiment.

Fig. 9G is a diagram illustrating a screen display example when a series of simulations are performed by the railway system simulator according to the present embodiment.

DETAILED DESCRIPTION OF THE INVENTION

Embodiments of the present invention will be described with reference to the drawings.

First embodiment

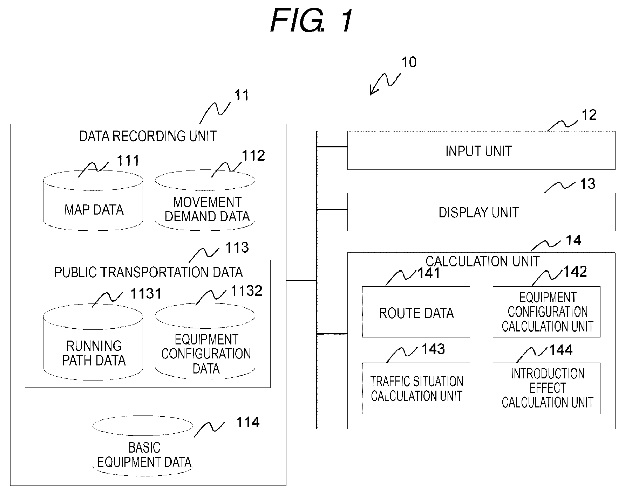

Fig. 1 is a block diagram of a traffic system simulator 10 according to a first embodiment.

The traffic system simulator 10 is a system implemented by a computer including an input output device, a storage device, and an arithmetic device executing a software program, and is used in a simulation for the introduction of a route-type traffic system. The route-type traffic system is a traffic system such as a railroad, a route bus, water transportation, and air transportation, in which transportation such as a train, an automobile, a boat, and an aircraft travels while carrying passengers along a predetermined route. In the present embodiment, a railway system is exemplified as an example of the route-type traffic system.

In the railway system, railroad tracks are laid between stations, and trains carrying passengers travel on the railroads tracks. Incidental equipment such as a traffic light, a point, a track circuit, and the like is installed in the station and the railroad track. In addition, substations are installed at predetermined intervals in the vicinity of the railroad track, and supply power to the equipment.

The traffic system simulator 10 is configured with a computer including an input device and a display device; if a line is drawn on a map displayed on a screen, a railway system is automatically made in which a railroad track is laid along the line, and further, an equipment configuration and a running schedule are automatically generated. The equipment configuration includes information regarding components of the railway system. For example, the equipment configuration is information indicating components constituting the railway system, an arrangement manner of respective components, a connection manner between the respective components, and an interrelationship between the respective components. Further, the traffic system simulator 10 calculates an expected traffic situation of people moving on the road on foot or by car, and people moving by the railway system, based on the equipment configuration and the running schedule. Further, the traffic system simulator 10 calculates an introduction balance of the railway system, based on the equipment configuration.

For example, a standard configuration for introducing each type of equipment, such as civil engineering, track circuit laying, substation equipment installation, and vehicle equipment may be set in advance, and a system configuration may be constructed by combining respective types of equipment.

If referring to Fig. 1, the traffic system simulator 10 includes a data recording unit 11, an input unit 12, a display unit 13, and a calculation unit 14. The data recording unit 11 records map data 111, movement demand data 112, public transportation data 113, and basic equipment data 114. The public transportation data 113 includes running path data 1131, and equipment configuration data 1132.

The calculation unit 14 includes an equipment configuration calculation unit 142, a traffic situation calculation unit 143, and an introduction effect calculation unit 144, and receives route data 141.

The map data 111 is real map data of a region to be simulated.

The basic equipment data 114 is basic data for calculating the system configuration and the equipment configuration of a railway system to be introduced, and an initial introduction cost, a running cost, and profit of the railway system.

With respect to the components for constituting the railway system, a cost for installing the components (installation cost), and a cost for operation and maintenance (operation and maintenance cost) are included in the basic equipment data. For example, with respect to the vehicle, the station, the substation, the railroad track, the traffic light, and the like which are the components of the railway system, the installation cost and the operation and maintenance cost are determined in advance, and are set as the basic equipment data 114. Further, with respect to the vehicle, the performance, and the like of the drive device required for calculating the number of passengers that can be carried (for example, quota) and a travelling time between stations are set as the basic equipment data 114. Further, information of an electricity rate system in a target area is also included in the basic equipment data 114.

The movement demand data 112 is data representing a demand of how many people perform which movement action, in a target area. Individual users may be used as a movement unit, and a virtual movement unit in which dozens to 100 people are gathered may be used. Information on a departure and a destination of the movement of the movement unit are set. Further, for example, an actual measurement result may be used, or the actual measurement result may be arranged so as to be easily handled. Alternatively, movement demand data that is determined by assumption may be used.

The public transportation data 113 is data generated by the traffic system simulator 10. The running path data 1131 is data representing a path along which the train of the railway system travels, which is generated by the traffic system simulator 10. The equipment configuration data 1132 is data regarding the system configuration and respective components of the railway system that are generated by the traffic system simulator 10.

In fact, further, schedule data based on which the train of the railway system travels, and data for the balance of the railway system are generated by the traffic system simulator 10.

The input unit 12 is an input device, by which the operator performing a simulation of railway system introduction sets or inputs data.

The display unit 13 is an output device which displays information or an image, which is acquired, is referred to, or is generated by the traffic system simulator 10, on a screen.

If at least positions which are two end-stations of a route in the railway system are designated, the equipment configuration calculation unit 142 calculates an equipment configuration of the railway system, in which a route is installed between two end-stations based on the map data, stations are installed at predetermined intervals on the route, based on the basic equipment data 114, and substations are installed at predetermined intervals in the vicinity of the route, and calculates an available running schedule in the railway system. The running schedule that is available in the railway system is calculated so as to satisfy minimum constraints of a traveling possible time between stations, and a running interval between trains traveling before and after this train, in consideration of the traveling characteristics of the vehicle and the characteristics of a signal system. As a schedule generation method, a method of defining a desired running interval in the basic equipment data 114, and calculating a schedule based on the running interval, a method of defining the number of vehicles and the number of organized vehicles in the basic equipment data 114, and calculates a schedule so as not to exceed the number of physical vehicles and the number of organized vehicles.

The basic equipment data 114 may not include in advance the number of vehicles and the number of organized vehicles. In this case, the number required for traveling is calculated from the calculated running schedule.

For example, if the operator sees the map of the target area displayed on the display unit 13, and draws a line on the map in response to an input from the input unit 12, two ends of a route of the railway system, and a path between the two ends are determined. The two ends are installation positions of two end-stations of the railway system. A route is installed along the path between both ends.

As the moving means of people, there are the railway system which is a route type traffic system in which a vehicle or the like travels a determined route, and a road-type moving section by which each person moves through their own road such as walking or a vehicle.

The traffic situation calculation unit 143 calculates a movement situation of the movement unit varying with an elapse of time, based on the movement demand data 112, for a movement of a movement unit on a road, by the road-type moving section of both or any one of walking and riding, and movement of the movement unit on the road by the railway system in the equipment configuration and the running schedule that are calculated by the equipment configuration calculation unit 142.

The introduction effect calculation unit 144 calculates an initial introduction cost required for introducing the railway system, based on the equipment configuration.

According to the present embodiment, since the equipment configuration of the railway system introduced between two end-stations, the traffic state after the introduction, and an initial introduction cost required for introduction are calculated, only by the operator designating the positions of two end-stations and a path therebetween, it is possible to easily predict the introduction effect of the railway system. For example, it is possible to predict how much the congestion of the road is relaxed due to the introduction of the railway system, from the calculated traffic situation.

In this case, the equipment configuration calculation unit 142 displays a map screen based on the map data, and calculates an equipment configuration in which the route, the station, and the substation are installed, with both ends of the route as positions of two end-stations, if the route is drawn on the map screen. According to this, since the equipment configuration of the railway system is calculated only by the operator drawing a route on the map screen, it is possible to easily know the introduction effect of the railway system.

Further, if the route is changed by dragging and dropping the map screen, the equipment configuration calculation unit 142 calculates an equipment configuration in which the route, the station, and the substation are installed, with both ends of the changed route as positions of two end-stations. According to this, it is possible to check the configuration of a railway system to be introduced, while changing the shape of the route by an intuitive operation on the map screen.

Further, the equipment configuration calculation unit 142 may calculate first power consumption by operating the equipment based on the calculated equipment configuration, and may calculate second power consumption by the running based on the calculated running schedule. Further, the equipment configuration calculation unit 142 may calculate power consumption in a range that is in charge by each substation, based on the first power consumption and the second power consumption, and determine a placement or a capacity of the substation, so as to cover the power consumption in a range that is in charge by the substation. According to this, it is possible to easily match the equipment configuration and the capacity of the substation.

For example, the first power consumption may be determined in advance, with the power consumption for each type of equipment which is a component of the railway system as a constant value. Meanwhile, power is mainly consumed by running of the train during the acceleration and the deceleration of the train. Therefore, information on the power consumption during the acceleration and the deceleration is determined in advance, and when the acceleration and the deceleration occur is calculated from the running schedule, and the power consumption during the acceleration and the deceleration may be calculated based on the held information.

Further, the introduction effect calculation unit 144 may further obtain fare data representing a fare that the user of the railway system pays, calculate the fare income of the railway system, based on the equipment configuration, the running schedule, and the fare data, and calculate the running cost of the railway system, based on the equipment configuration and the running schedule.

It is possible to obtain a running cost of the railway system by calculating a running cost for operation and maintenance of the equipment of the railway system based on the equipment configuration, calculating a running cost for running of a train based on the running schedule, and summing the calculated running costs. The running costs for running of a train include the electric charge for the power consumed in order to run the train, and the cost of maintenance of the train. Further, fare data may be set in advance, for example, as a part of the basic equipment data. According to this, since not only the initial introduction cost, but also subsequently the fare income and the running cost are also calculated, it is possible to know the transition of the balance after the introduction of the railway system.

Further, the basic equipment data may include station interval data representing a station distance which is an interval between stations when stations are automatically placed, substation interval data representing a substation distance which is an interval between substations when substations are automatically placed, and track circuit length data representing the track circuit length. In this case, the equipment configuration calculation unit 142 may install stations at intervals less than the station distance on the route between two end-stations, install substations at intervals less than the substation distance in the vicinity of the route, and install a track circuit of the track circuit length on the route. According to this, it is possible to calculate the equipment configuration in a simple calculation based on simple data, thereby easily performing a schematic simulation for the introduction of a railway system.

For example, the upper limit of the station distance may be set in advance as the station interval data. Further, the upper limit and the lower limit of the station distance may be set in advance.

Alternatively, the basic equipment data may include traveling speed data representing the traveling speeds of vehicles of the railway system, and stay time data representing the stay times of the vehicles of the railway system in the station. The traffic situation calculation unit 143 prepares a running schedule such that a train travels at the traveling speed and stays at a station for only the stay time, and schedules do not overlap each other. According to this, it is possible to calculate the traffic situation in a simple calculation based on simple data, thereby easily performing a schematic simulation for the introduction of a railway system.

Further, the basic equipment data may include initial track cost data representing an initial track cost which is the cost per unit distance for installing a railway track, initial station cost data representing an initial station cost which is the cost of installing the station, initial substation cost data representing an initial substation cost which is the cost for installing a substation, and initial vehicle cost data representing an initial vehicle cost which is the cost for purchasing a vehicle and an organization. Then, the introduction effect calculation unit 144 includes a value obtained by multiplying the initial track cost by the length of a track, a value obtained by multiplying the initial station cost by the number of stations, a value obtained by multiplying the initial substation cost by the number of substations, and a value obtained by multiplying the initial vehicle cost by the number of vehicles, in the initial introduction cost. According to this, it is possible to calculate the introduction cost in a simple calculation based on simple data, thereby easily performing a schematic simulation for the introduction of a railway system.

Further, the basic equipment data may include track running cost data representing the track running cost which is the cost per unit distance for maintaining the railway track, station running cost data representing a station running cost which is the cost for maintaining the station per year, substation running cost data representing a substation running cost which is the cost for maintaining the substation per year, and vehicle running cost data representing a vehicle running cost which is the cost for maintaining the vehicle and organization per year. The introduction effect calculation unit 144 includes a value obtained by multiplying the track running cost by the length of a track, a value obtained by multiplying the station running cost by the number of stations, a value obtained by multiplying the substation running cost by the number of substations, and a value obtained by multiplying the vehicle running cost by the number of vehicles, in the running cost. According to this, it is possible to calculate the running cost in a simple calculation based on simple data, thereby easily performing a schematic simulation for the introduction of a railway system.

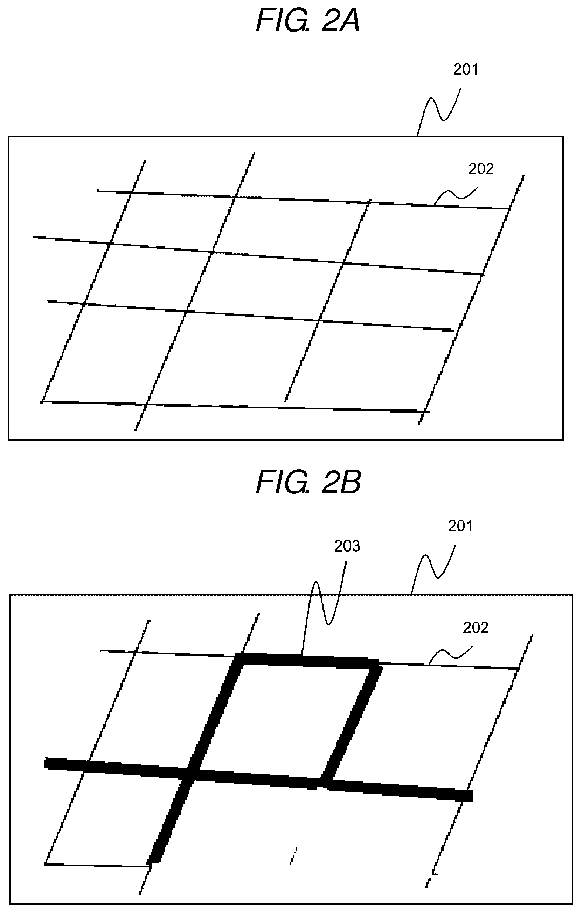

Figs. 2A to 2D are diagrams illustrating a series of states of an introduction simulation of a railway system according to the present embodiment.

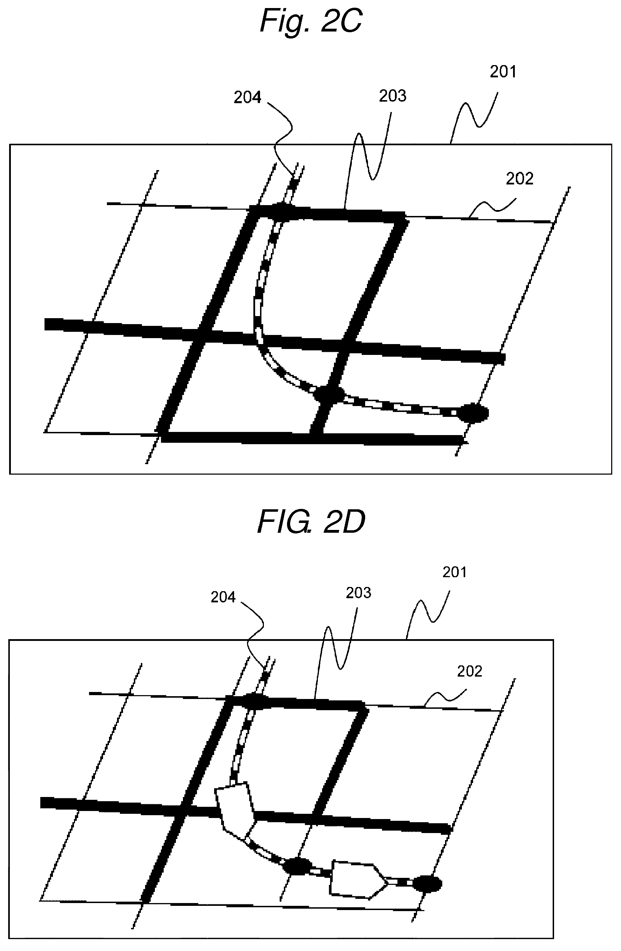

A map screen 201 of Fig. 2A displays an area in which a road 202 is organized but a railroad is not organized. The introduction of a railway system is simulated for the area as a target area. If executing a simulation of the movement situation of people, as illustrated in FIG. 2B, a traffic display 203 indicating the movement situation of people appears on the road 202. Thereafter, if drawing a line on the map screen 201, as illustrated in Fig. 2C, a route 204 is displayed on the map screen 201 along the line. When executing the simulation of the movement situation of people in this state, the traffic display 203 indicating the movement situation of the people changes due to the introduction of the railway system, as illustrated in Fig. 2D. In the examples of Figs. 2B to 2D, thick lines are drawn along the road as the traffic display 203. The thick lines may be different in the line color, the density, the thickness, and the filling pattern, depending on the abundance of the movement of people.

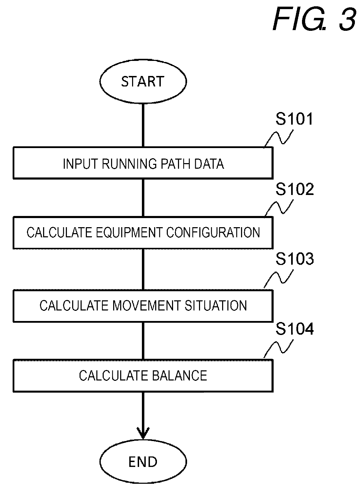

Fig. 3 is a flowchart illustrating an overall process of the railway system simulator according to the present embodiment.

If the route data 141 including a start point, an end point, and a path therebetween is input from the input unit 12 (step S101), the equipment configuration calculation unit 142 determines the system configuration of the railway system based on the route data 141, and calculates the equipment configuration and a running schedule (step S102). Next, the traffic situation calculation unit 143 calculates the movement situation based on the equipment configuration, the running schedule, and the movement demand data 112 (stepS103). Further, the introduction effect calculation unit 144 calculates the balance including the initial introduction cost and the running cost, based on the equipment configuration and the running schedule (step S104).

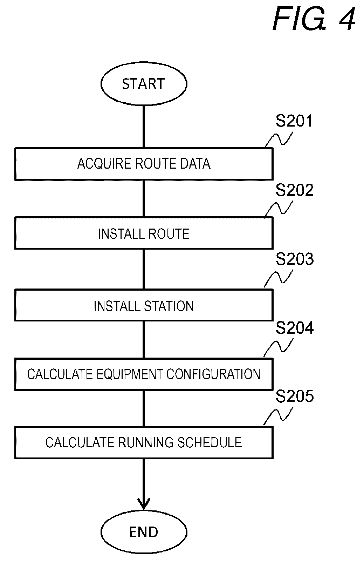

Fig. 4 is a flowchart illustrating an equipment configuration calculation process of a railway system simulator according to the present embodiment. The equipment configuration calculation process is the process of step S102 of Fig. 3.

If acquiring the route data 141 (step S201), the equipment configuration calculation unit 142 installs a route on the map according to information on the path included in the route data 141 (step S202). Subsequently, the equipment configuration calculation unit 142 installs stations based on the distance between stations, that is set in the basic equipment data 114 and installs substations based on the substation distance, on the railroad track, and determines the system configuration (stepS203). Further, the equipment configuration calculation unit 142 calculates the equipment configuration, based on the determined system configuration (step S204), and calculates the running schedule (step S205). The equipment configuration and the running schedule are displayed on an appropriate screen.

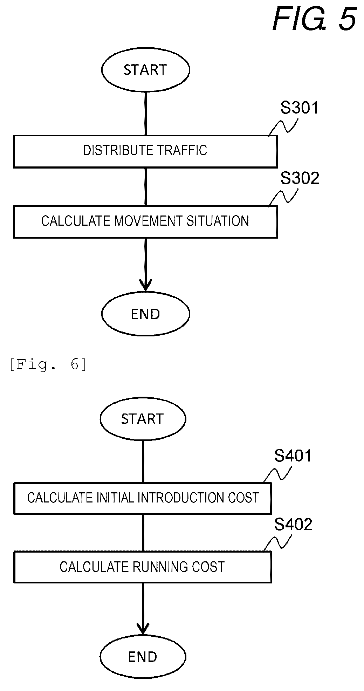

Fig. 5 is a flowchart illustrating a traffic situation calculation process of the railway system simulator according to the present embodiment. The traffic situation calculation process is the process of step S103 of Fig. 3.

The traffic situation calculation unit 143 distributes movement demand of people of the movement demand data 112 according to walking, a vehicle, each type of moving means of a railway system, or a predetermined selection rule obtained by combining them (step S301). The selection rule is rule information determining which moving means a person selects, from the utility determined based on parameters such as time required for movement, distance, and fare. For example, the selection rule is determined by the selection probability of the moving means. Further, the selection rule can be arbitrarily set by the operator.

The selection probability of each path by each type of moving means can be calculated by Equation (1).

$$P_j = \frac{\exp(V_j)}{\sum_{K=1}^{k=N}(V_k)} \qquad \cdots(1)$$

In Equation (1), Pj is the selection probability of a path j. Vj is the utility of the path j, and as an example, is a function with required time as a parameter. It is assumed that there are N paths.

Then, the traffic situation calculation unit 143 calculates the movement situation of people, for each path of the walking, the vehicle, and the railway system, based on the distributed movement demand, and displays the calculated movement situation on an appropriate screen (step S302).

Fig. 6 is a flowchart illustrating an introduction effect calculation process of the railway system simulator according to the present embodiment. The introduction effect calculation process is the process of step S104 of Fig. 3.

The introduction effect calculation unit 144 calculates the initial introduction cost required for introducing the railway system, by integrating the installation costs for the components included in the calculated equipment configuration (step S401).

Further, the introduction effect calculation unit 144 calculates the running cost required for operating and maintaining the railway system, by integrating the operation and maintenance costs for the components included in the calculated equipment configuration (step S402).

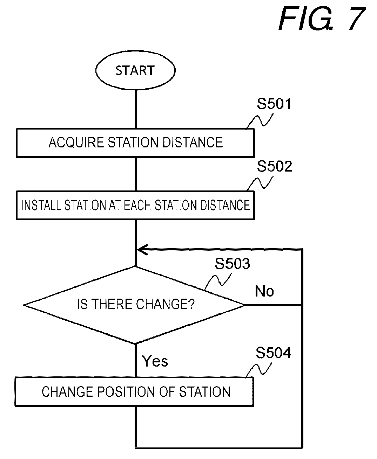

Fig. 7 is a flowchart illustrating a station providing process of the railway system simulator according to the present embodiment. The station providing process is a process of a part of step S203 of Fig. 4.

The equipment configuration calculation unit 142 acquires information on the station distance from the basic equipment data 114 (step S501), and installs a station on the route at each station distance (step S502).

The operator can change the positions of the start point, the end point, the path, the station on the path, that are installed, through an input from the input unit 12. If the start point, the end point, the path, the station, and the like of the route of the route data 141 are changed (Yes in step S503), the equipment configuration calculation unit 142 changes the installation position of the station (step S504). For example, if the path is extended by dragging and dropping the start point or the end point, the equipment configuration calculation unit 142 adds and installs a station on the extended path. If the path is changed by dragging and dropping the railroad track, the equipment configuration calculation unit 142 reinstalls stations on the changed path. If dragging and dropping the station, the equipment configuration calculation unit 142 changes the position of the station, and changes the position of the railroad track associated therewith, as necessary.

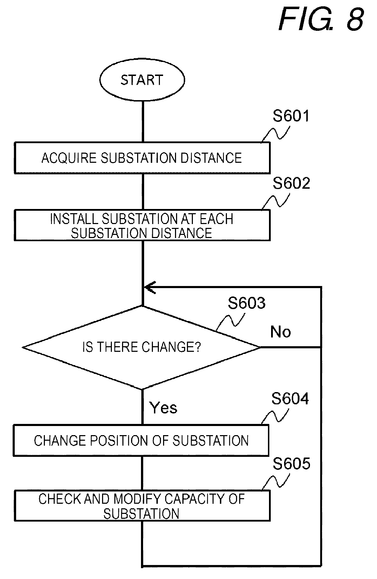

Fig. 8 is a flowchart illustrating a substation providing process of the railway system simulator according to the present embodiment. The substation providing process is the process of a part of step S203 of Fig. 4.

The equipment configuration calculation unit 142 acquires information on the substation distance from the basic equipment data 114 (step S601), and installs a substation on the route at each substation distance (step S602).

If the start point, the end point, the path, the station, and the like of the route of the route data 141 are changed (Yes in step S603), the equipment configuration calculation unit 142 changes the installation position of the substation (step S604). For example, if the path is extended by dragging and dropping the start point or the end point, the equipment configuration calculation unit 142 adds and installs a substation along the extended path. If the path is changed by dragging and dropping the railroad, the equipment configuration calculation unit 142 reinstalls substations on the changed path. If dragging and dropping the substation, the equipment configuration calculation unit 142 changes the position of the substation, checks whether or not the substation can cover power consumption in a range that is in charge by the substation, and modifies the capacity of the substation or the arrangement of the substation as necessary (step S605).

Screen display examples when a series of simulations of a railway system introduction are performed by the railway system simulator according to the present embodiment will be described.

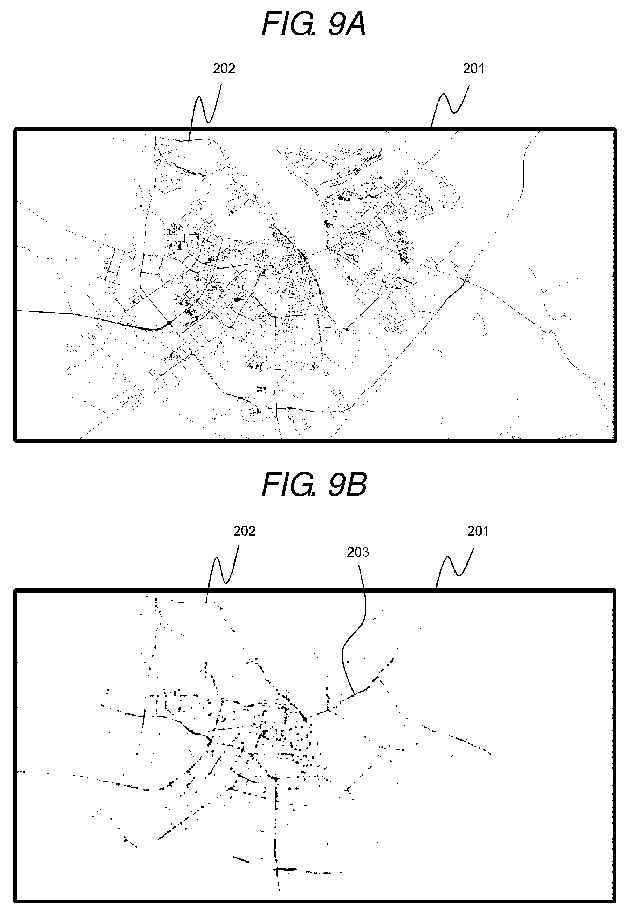

Figs. 9A to 9G are diagrams illustrating screen display examples when a series of simulations are performed by the railway system simulator according to the present embodiment.

Fig. 9A illustrates a map screen 201 of a target area, and a road 202 is spread around the target area. People move on foot or by vehicle on the road 202. It is assumed that the introduction of a railway system to this target area is planned, and the simulation is executed.

Fig. 9B illustrates a map screen 201 representing the result of a simulation of a traffic situation in a state before the introduction of the railway system. A traffic display 203 representing the movement situation of people appears on the road 202, which allows the state of congestion of a certain road 202 to be visually recognized. For example, it is considered to change the color of the traffic display 203 depending on the state of congestion.

Further, as an example of the traffic display 203, a point for simulating a person or a predetermined number of people is used, and the movement over time at this point may be calculated. The traffic display 203 is represented by a collection of small dots, and it is possible to express the state of congestion with the density or the size of the point. Further, the simulated state of movement of people can be seen in a video.

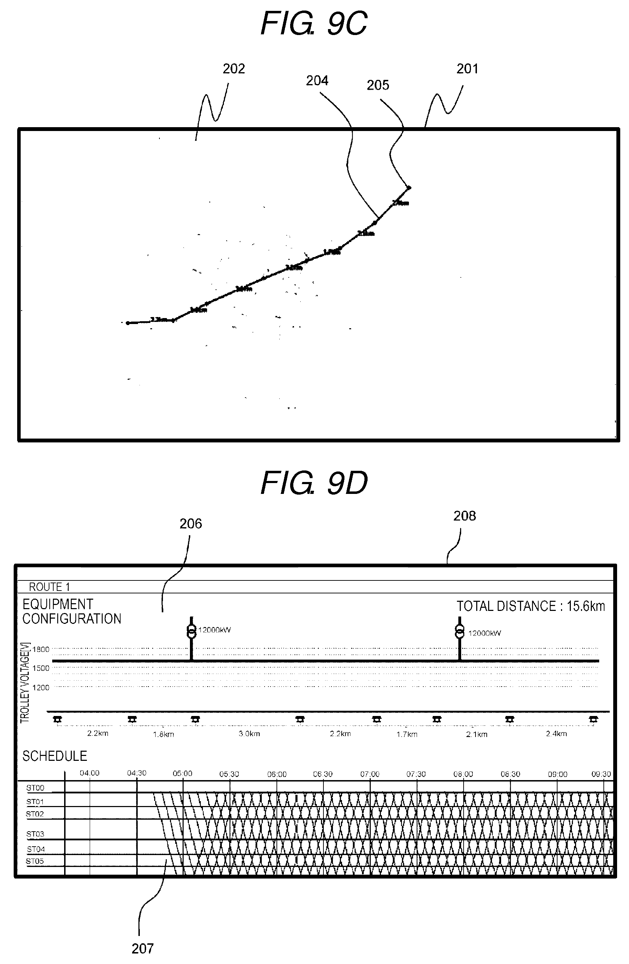

Fig. 9C illustrates a route 204 which appears by drawing a line on the map screen 201 of the target area. Stations 205 are arranged on the route 204. It is expected to observe a change in movement of people by the introduction of such a railway system.

Fig. 9D illustrates an analysis screen 208 displaying the simulation result of the equipment configuration 206 and the running schedule 207 of the railway system. The arrangement of substations is represented as the equipment configuration 206, and a schedule is represented as the running schedule 207.

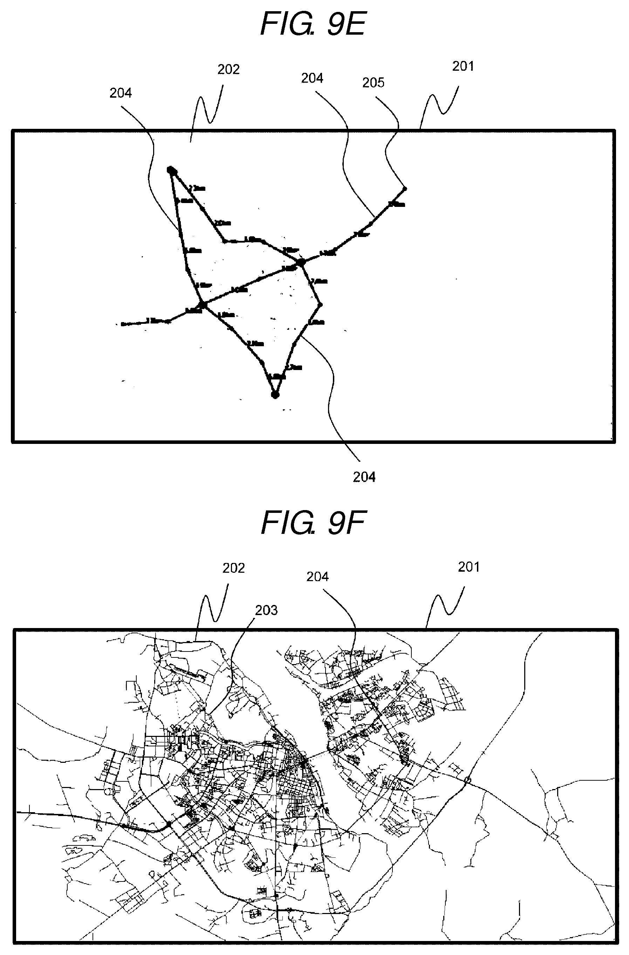

In Fig. 9E, three routes 204 are displayed on the map screen 201 of the target area. Thus, it is expected to further observe a change in movement of people.

Fig. 9F illustrates a screen that is displayed by executing a simulation of the traffic situation when the railway system of Fig. 9E is introduced. The traffic display 203 is displayed on the road 202 and the route 204 of the map screen 201.

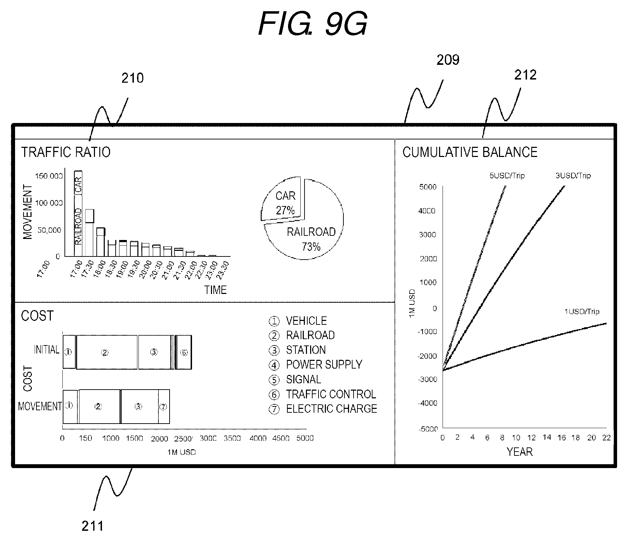

In Fig. 9G, a traffic ratio screen 210, a cost screen 211, and a cumulative balance screen 212 are displayed on the balance screen 209. The traffic ratio screen 210 represents the rate of movement by each type of moving means at respective times spaced at intervals of 30 minutes. Here, a car and a train are moving means. The details of an initial introduction cost ("initial" in Fig. 9G) and a running cost ("running" in Fig. 9G) are represented in a graph, on the cost screen 211. The cumulative balance is represented per year after the railway system introduction, on the cumulative balance screen 212. Here, three graphs are represented with fares to be paid when riding the train, as a parameter. Three fare values of one US dollar, three US dollars, and five US dollars for a single ride are represented.

Second embodiment

The first embodiment exemplifies a traffic system simulator capable of calculating various items such as the system configuration, the equipment configuration, the running schedule, the traffic situation, the cost, and the balance, for introduction of a railway system, but the present invention is not to be limited thereto.

A second embodiment exemplifies a traffic system simulator that specializes in the operation of the system configuration. The traffic system simulator according to the second embodiment has a configuration obtained by excluding the traffic situation calculation unit 143 and the introduction effect calculation unit 144 from the configuration illustrated in Fig. 1.

The data recording unit 11 records in advance the map data 111, the basic equipment data 114 for calculating the equipment configuration of the railway system, and the movement demand data 112 representing the movement to a destination from a departure of a movement unit.

If at least positions which are two end-stations of a route in the railway system are designated, the equipment configuration calculation unit 142 calculates a system configuration, in which a route is installed between two end-stations based on the map data 111, stations are installed at predetermined intervals on the route, based on the basic equipment data 114, and displays the route and the stations on the map screen based on the map data 111 by being overlapped.

According to this, the configuration of a railway system that is introduced between the two end-stations can be easily predicted only by designating the positions of the two end-stations. It is possible to first schematically try to arrange a system, in the case of considering the introduction of the railway system.

In this embodiment, in this case, if the route is drawn on the map screen, the equipment configuration calculation unit 142 calculates the system configuration in which a route and a station is installed, with two ends of the route as the position of the two end-stations. Further, if the route is changed by dragging and dropping the map screen, the equipment configuration calculation unit 142 recalculates a system configuration in which the route and the station are installed, with two ends of the changed route as the positions of two end-stations. According to this, it is possible to check the configuration of the railway system to be introduced while installing and changing the route by intuitive operation on the map screen.

Further, if at least positions which are two end-stations of a route in the railway system are designated, the equipment configuration calculation unit 142 calculates a system configuration in which substations are further installed at predetermined intervals in the vicinity of the route, based on the basic equipment data 114, and may display the route, the station, and the substation on the map screen based on the map data 111, by being overlapped. According to this, it is possible to check the configuration of the railway system to be introduced, by further installing the substations by intuitive operation on the map screen.

Third embodiment

A third embodiment exemplifies a traffic system simulator that specializes in the operation of the introduction cost. The traffic system simulator according to the third embodiment has a configuration obtained by excluding the traffic situation calculation unit 143 from the configuration illustrated in Fig. 1.

The data recording unit 11 records in advance the map data 111, the basic equipment data 114 for calculating the equipment configuration of the railway system, and the movement demand data 112 representing the movement to a destination from a departure of a movement unit.

If at least positions which are two end-stations of a route in the railway system are designated, the equipment configuration calculation unit 142 calculates an equipment configuration of the railway system, in which a route is installed between two end-stations based on the map data 111, stations are installed at predetermined intervals on the route, based on the basic equipment data 114, and substations are installed at predetermined intervals in the vicinity of the route.

The introduction effect calculation unit 144 calculates an initial introduction cost required for introducing the railway system, based on the calculated equipment configuration.

According to this, if only the positions of two end-stations are designated, the equipment configuration of the railway system to be introduced between the two end-stations, and an initial introduction cost required for the introduction are calculated, such that it is possible to easily predict the introduction cost of the railway system.

Further, the equipment configuration calculation unit 142 further may calculate the running schedule that is available in the railway system. In this case, the introduction effect calculation unit 144 further may obtain fare data representing fare that the user of the railway system pays, calculate a fare income of the railway system, based on the equipment configuration, the running schedule, and the fare data, and calculate the running cost of the railway system, based on the equipment configuration. According to this, since not only the initial introduction cost, but also subsequently the fare income and the running cost are also calculated, it is possible to know the transition of the balance after the introduction of the railway system.

In this case, the introduction effect calculation unit 144 may calculate the time transition of the cumulative balance based on the initial introduction cost, the fare income, and the running cost, and display the cumulative balance screen 212 exemplifying the graph in Fig. 9G. According to this, it is possible to visually check the transition of the cumulative balance after introduction of the railway system.

At this time, the introduction effect calculation unit 144 calculates the present value of the fare income, based on the fare income and a predetermined fare income discount rate, and may calculate the time transition of the cumulative balance considering the discount rate, based on the initial introduction cost, the present values of the fare income, and the running cost. According to this, it is possible to know the transition of the cumulative balance closer to reality by the present value of the fare income.

Fourth embodiment

A fourth embodiment exemplifies a traffic system simulator that specializes in the operation of the traffic situation. The traffic system simulator according to the fourth embodiment has a configuration obtained by excluding the introduction effect calculation unit 144 from the configuration illustrated in Fig. 1.

The data recording unit 11 records in advance the map data 111, the basic equipment data 114 for calculating the equipment configuration of the railway system, and the movement demand data 112 representing the movement to a destination from a departure of a movement unit.

If at least positions which are two end-stations of a route in the railway system are designated, the equipment configuration calculation unit 142 calculates a system configuration, in which a route is installed between two end-stations based on the map data 111, and stations are installed at predetermined intervals on the route, based on the basic equipment data 114, and calculates a running schedule that is available in the railway system.

The traffic situation calculation unit 143 calculates a movement situation of the movement unit varying with an elapse of time, based on the movement demand data 112, for a movement of a movement unit on a route by the railway system of the calculated system configuration and running schedule.

According to this, if only the positions of two end-stations are designated, the equipment configuration of the railway system to be introduced between the two end-stations and the traffic state after the introduction are calculated, such that it is possible to easily predict the introduction effect of the railway system.

Further, the traffic situation calculation unit 143 may calculate a movement situation of the movement unit varying with an elapse of time, for a movement of a movement unit on a road in a state where the railway system is not introduced, a movement of a movement unit on a road in a state where the railway system is introduced, and movement of the movement unit on the road by the railway system which is railway infrastructure.

In this case, the traffic situation calculation unit 143 calculates a movement situation of the movement unit varying with an elapse of time, based on the movement demand data 112, for a movement of a movement unit on a road by the road-type moving section of at least one of walking and riding, in a state where the railway system is not introduced. Further, the traffic situation calculation unit 143 may calculate a movement situation of the movement unit varying with an elapse of time, based on the movement demand data 112, for a movement of a movement unit on a road by the road-type moving section in a state where the railway system is introduced, and movement of the movement unit on the route by the railway system which is route-type moving means. According to this, it is possible to compare the traffic situation before and after the introduction of the route-type traffic system.

Hitherto, various embodiments of the present invention have been described. The embodiments described above are examples for explaining the present invention, and are not intended to limit the scope of the present invention to those embodiments. Those skilled in the art can implement the present invention in various other aspects without departing from the gist of the present invention.

For example, the map data may include the height information such as the elevation of each point. The running cost includes electricity rate of power consumption by running the train in accordance with the running schedule. In this case, the introduction effect calculation unit 144 calculates the power consumption by running the train, by using the height information in the map data. Since the gradient (up, down) of the route is known from the height information, the power consumption may be calculated in view of the gradient. For example, different values may be set as the power consumption for the traveled distance, in the up gradient and the down gradient. Thus, it is possible to calculate the running cost due to power consumption by the train traveling, at a high accuracy.

Further, in the respective embodiments, it is assumed that cost required for the introduction of each type of equipment is set in advance as a fixed value, but the present invention is not limited thereto. The actual data of the railway system which was introduced in the past is accumulated, and the cost of each type of equipment may be calculated based on the accumulated data.

**Claims**

1. A traffic system simulator which simulates the introduction of a route-type traffic system, **characterized by** comprising:

 a data recording unit that records map data, basic equipment data for calculating an equipment configuration of the route-type traffic system, and movement demand data representing movement of a moving unit from a departure to a destination;
 an equipment configuration calculation unit that, if at least positions which are two end-stations of a route in the route-type traffic system are designated, calculates an equipment configuration of the route-type traffic system, in which a route is installed between two end-stations based on the map data, stations are installed at predetermined intervals on the route, based on the basic equipment data, and substations are installed at predetermined intervals in the vicinity of the route, and calculates a running schedule available in the route-type traffic system; a traffic situation calculation unit that calculates a movement situation of the movement unit varying with an elapse of time, based on the movement demand data, for a movement of a movement unit on a road, by at least one road-type moving section of walking and riding, and movement of the movement unit on the route by the route-type traffic system in the equipment configuration and the running schedule; and an introduction effect calculation unit that calculates an initial introduction cost required for introducing the route-type traffic system based on the equipment configuration.

2. The traffic system simulator according to Claim 1, wherein the equipment configuration calculation unit displays a map screen based on the map data, and calculates an equipment configuration in which the route, the station, and the substation are installed, with both ends of the route as positions of two end-stations, if the route is drawn on the map screen and optionally wherein if the route is changed by dragging and dropping the map screen, the equipment configuration calculation unit recalculates an equipment configuration in which the route, the station, and the substation are installed, with both ends of the changed route as positions of two end-stations.

3. The traffic system simulator according to Claim 1 or 2, wherein the equipment configuration calculation unit calculates first power consumption by operating the equipment based on the equipment configuration, calculates second power consumption by running based on the running schedule, calculates power consumption in a range which is in charge by each substation, based on the first power consumption and the second power consumption, and determines a placement or a capacity of the substation, so as to cover the power consumption in a range which is in charge by the substation.

4. The traffic system simulator according to any one of the previous Claims, wherein the introduction effect calculation unit further obtains fare data representing fare that the user of the route-type traffic system pays, calculates a fare income of the route-type traffic system, based on the equipment configuration, the running schedule, and the fare data, and calculates the running cost of the route-type traffic system, based on the equipment configuration and the running schedule.

5. The traffic system simulator according to any one of the previous Claims, wherein the basic equipment data includes station interval data representing a station distance which is an interval between stations when the stations are automatically arranged, substation interval data representing a substation distance which is an interval between substations when the substations are automatically arranged, and track circuit length data representing a track circuit length, and wherein the equipment configuration calculation unit installs stations at intervals less than the station distance on the route between two end-stations, installs substations at intervals less than the substation distance in the vicinity of the route, and installs a track circuit of the track circuit length on the route.

6. The traffic system simulator according to any one of the previous Claims, wherein the basic equipment data includes traveling speed data representing a traveling speed of a vehicle in the route-type traffic system, and stay time data representing a stay time of the vehicle of the route-type traffic system in a station, and wherein the traffic situation calculation unit prepares a running schedule such that a train travels at the traveling speed and stays at a station for only the stay time, and schedules do not overlap each other.

7. The traffic system simulator according to any one of the previous Claims, wherein the basic equipment data includes station cost data representing a station cost which is a cost for installing a station, and substation cost data representing a substation cost which is a cost for installing a substation, and wherein the introduction effect calculation unit includes a value obtained by multiplying the station cost by the number of stations, and a value obtained by multiplying the substation cost by the number of substations, in the initial introduction cost.

8. A traffic system simulator which simulates a system configuration of a route-type traffic system, comprising:

a data recording unit that records map data, basic equipment data for calculating an equipment configuration of the route-type traffic system, and movement demand data representing movement of a moving unit from a departure to a destination; a configuration calculation unit that, if at least positions which are two end-stations of a route in the route-type traffic system are designated, calculates a system configuration, in which a route is installed between two end-stations based on the map data, stations are installed at predetermined intervals on the route, based on the basic equipment data, and displays the route and the stations on a map screen based on the map data by being overlapped.

9. The traffic system simulator according to Claim 8, wherein the configuration calculation unit calculates a system configuration in which the route and the station are installed, with both ends of the route as positions of two end-stations, if the route is drawn on the map screen, and
wherein if the route is changed by dragging and dropping the map screen, the configuration calculation unit recalculates a system configuration in which the route and the station are installed, with both ends of the changed route as positions of two end-stations.

10. The traffic system simulator according to Claim 8 or 9,
wherein if at least positions which are two end-stations of a route in the route-type traffic system are designated, the configuration calculation unit calculates a system configuration in which substations are further installed at predetermined intervals in the vicinity of the route, based on the basic equipment data, and displays the route, the stations, and the substations on a map screen based on the map data by being overlapped.

11. A traffic system simulator which simulates an introduction cost of a route-type traffic system, comprising:

a data recording unit that records map data, basic equipment data for calculating an equipment configuration of the route-type traffic system, and movement demand data representing movement of a moving unit from a departure to a destination;
an equipment configuration calculation unit that, if at least positions which are two end-stations of a route in the route-type traffic system are designated, calculates an equipment configuration of the route-type traffic system, in which a route is installed between two end-stations based on the map data, stations are installed at predetermined intervals on the route, based on the basic equipment data, and substations are installed at predetermined intervals in the vicinity of the route; and
a cost calculation unit that calculates an initial introduction cost required for introducing the route-type traffic system, based on the equipment configuration.

12. The traffic system simulator according to Claim 11, wherein the equipment configuration calculation unit further calculates a running schedule that is available in the route-type traffic system, and

wherein the cost calculation unit obtains fare data representing fare that a user of the route-type traffic system pays, calculates a fare income of the route-type traffic system, based on the equipment configuration, the running schedule, and the fare data, and calculates a running cost of the route-type traffic system, based on the equipment configuration and the running schedule;
and optionally wherein the map data includes height information indicating height of each point, the running cost includes electricity rate of power consumption by traveling of a train in accordance with the running schedule, and the cost calculation unit calculates power consumption by the traveling of the train, by using the height information.

13. The traffic system simulator according to Claim 12, wherein the cost calculation unit calculates time transition of cumulative balance based on the initial introduction cost, the fare income, and the running cost, and display a cumulative balance graph screen on which the time transition is represented in a graph;
and optionally wherein the cost calculation unit calculates the present value of the fare income, based on the fare income and a predetermined fare income discount rate, and calculates the time transition of the cumulative balance, based on the initial introduction cost, the present value of the fare income, and the running cost.

14. A traffic system simulator which simulates a traffic situation by a route-type traffic system, comprising:

a data recording unit that records map data, basic equipment data for calculating an equipment configuration of the route-type traffic system, and movement demand data representing movement of a moving unit from a departure to a destination;
a configuration calculation unit that if at least positions which are two end-stations of a route in the route-type traffic system are designated, calculates a system configuration of the route-type traffic system, in which a route is installed between two end-stations based on the map data, and stations are installed at predetermined intervals on the route, based on the basic equipment data, and calculates a running schedule that is available in the route-type traffic system; and
a traffic situation calculation unit that calculates a movement situation of the movement unit varying with an elapse of time, based on the movement demand data, for a movement of a movement unit on a route, by the route-type traffic system of the system configuration and the running schedule.

**15.** The traffic system simulator according to Claim 14, wherein the traffic situation calculation unit

calculates a movement situation of the movement unit varying with an elapse of time, based on the movement demand data, for a movement of a movement unit on a road, by a road-type moving section of at least one of walking and riding, in a state where the route-type traffic system is not introduced, and

calculates a movement situation of the movement unit varying with an elapse of time, based on the movement demand data, for a movement of a movement unit on a road, by the road-type moving section and movement of the movement unit on the route by the route-type traffic system, in a state where the route-type traffic system is introduced.

**16.** A traffic system simulation method for simulating introduction of a route-type traffic system, causing:

a data recording unit to record map data, basic equipment data for calculating an equipment configuration of the route-type traffic system, and movement demand data representing movement of a moving unit from a departure to a destination,

if at least positions which are two end-stations of a route in the route-type traffic system are designated, an equipment configuration calculation unit to calculate an equipment configuration of the route-type traffic system, in which a route is installed between two end-stations based on the map data, stations are installed at predetermined intervals on the route, based on the basic equipment data, and substations are installed at predetermined intervals in the vicinity of the route, and to calculate a running schedule available in the route-type traffic system;

a traffic situation calculation unit to calculate a movement situation of the movement unit varying with an elapse of time, based on the movement demand data, for a movement of a movement unit on a road, by a road-type moving section of at least one of walking and riding, and movement of the movement unit on the route by the route-type traffic system in the equipment configuration and the running schedule; and

an introduction effect calculation unit to calculate an initial introduction cost required for introducing the route-type traffic system, based on the equipment configuration.

**17.** A traffic system simulation method for simulating a system configuration of a route-type traffic system, causing:

a data recording unit to record map data, basic equipment data for calculating an equipment configuration of the route-type traffic system, and movement demand data representing movement of a moving unit from a departure to a destination;

if at least positions which are two end-stations of a route in the route-type traffic system are designated, a configuration calculation unit to calculate a system configuration, in which a route is installed between two end-stations based on the map data, and stations are installed at predetermined intervals on the route, based on the basic equipment data, and displays the route and the stations on a map screen based on the map data by being overlapped.

**18.** A traffic system simulation method for simulating an introduction cost of a route-type traffic system, causing:

a data recording unit to record map data, basic equipment data for calculating an equipment configuration of the route-type traffic system, and movement demand data representing movement of a moving unit from a departure to a destination;

if at least positions which are two end-stations of a route in the route-type traffic system are designated, an equipment configuration calculation unit to calculate an equipment configuration of the route-type traffic system, in which a route is installed between two end-stations based on the map data, stations are installed at predetermined intervals on the route, based on the basic equipment data, and substations are installed at predetermined intervals in the vicinity of the route; and

a cost calculation unit to calculate an initial introduction cost required for introducing the route-type traffic system, based on the equipment configuration.

**19.** A traffic system simulation method for simulating a traffic situation by a route-type traffic system, causing:

a data recording unit to record map data, basic equipment data for calculating an equipment configuration of the route-type traffic system, and movement demand data representing movement of a moving unit from a departure to a destination,

if at least positions which are two end-stations of a route in the route-type traffic system are designated, a configuration calculation unit to calculate a system configuration of the route-type traffic system, in which a route is installed between two end-stations based on the map data, and stations are installed at predetermined intervals on the route, based on the basic equipment data, and calculates a running schedule that is available in the route-type traffic system; and

a traffic situation calculation unit to calculate a movement situation of the movement unit varying with an elapse of time, based on the movement demand data, for a movement of a movement unit on a route, by the route-type traffic system of the system configuration and the running schedule.

# FIG. 1

**DATA RECORDING UNIT** (11)
- MAP DATA (111)
- MOVEMENT DEMAND DATA (112)
- PUBLIC TRANSPORTATION DATA (113)
  - RUNNING PATH DATA (1131)
  - EQUIPMENT CONFIGURATION DATA (1132)
- BASIC EQUIPMENT DATA (114)

(10)

**INPUT UNIT** (12)

**DISPLAY UNIT** (13)

**CALCULATION UNIT** (14)
- ROUTE DATA (141)
- EQUIPMENT CONFIGURATION CALCULATION UNIT (142)
- TRAFFIC SITUATION CALCULATION UNIT (143)
- INTRODUCTION EFFECT CALCULATION UNIT (144)

## FIG. 2A

## FIG. 2B

## Fig. 2C

## FIG. 2D

*FIG. 3*

START

S101

INPUT RUNNING PATH DATA

S102

CALCULATE EQUIPMENT CONFIGURATION

S103

CALCULATE MOVEMENT SITUATION

S104

CALCULATE BALANCE

END

*FIG. 4*

START

S201
ACQUIRE ROUTE DATA

S202
INSTALL ROUTE

S203
INSTALL STATION

S204
CALCULATE EQUIPMENT CONFIGURATION

S205
CALCULATE RUNNING SCHEDULE

END

*FIG. 5*

```
        ( START )
             │
             │              S301
             ▼
┌────────────────────────────┐
│      DISTRIBUTE TRAFFIC     │
└────────────────────────────┘
             │              S302
             ▼
┌────────────────────────────┐
│  CALCULATE MOVEMENT SITUATION │
└────────────────────────────┘
             │
             ▼
          ( END )
```

[Fig. 6]

```
        ( START )
             │
             │              S401
             ▼
┌──────────────────────────────────┐
│  CALCULATE INITIAL INTRODUCTION COST │
└──────────────────────────────────┘
             │              S402
             ▼
┌──────────────────────────────────┐
│       CALCULATE RUNNING COST      │
└──────────────────────────────────┘
             │
             ▼
          ( END )
```

*FIG. 7*

```
          ( START )
              │
              │              S501
    ┌─────────────────────────┐ ⤳
    │  ACQUIRE STATION DISTANCE │
    └─────────────────────────┘
              │              S502
    ┌───────────────────────────────┐ ⤳
    │ INSTALL STATION AT EACH STATION DISTANCE │
    └───────────────────────────────┘
              │
              ▼─────────────────────────┐
              ╱╲          S503          │
            ╱    ╲         ⤳            │
          ╱        ╲         No          │
        ╱  IS THERE  ╲──────────────────┤
          ╲ CHANGE? ╱                    │
            ╲    ╱                        │
              ╲╱                          │
              │ Yes        S504          │
    ┌─────────────────────────┐ ⤳        │
    │  CHANGE POSITION OF STATION │        │
    └─────────────────────────┘          │
              │                           │
              └───────────────────────────┘
```

*FIG. 8*

START

S601
ACQUIRE SUBSTATION DISTANCE

S602
INSTALL SUBSTATION AT EACH
SUBSTATION DISTANCE

S603
IS THERE CHANGE?          No

Yes                       S604
CHANGE POSITION OF SUBSTATION

S605
CHECK AND MODIFY CAPACITY OF
SUBSTATION

## FIG. 9A

## FIG. 9B

...

## FIG. 9C

202  204  205  201

## FIG. 9D

206  208

ROUTE 1

EQUIPMENT
CONFIGURATION

TOTAL DISTANCE : 15.6km

12000kW  12000kW

TROLLEY VOLTAGE[V]

1800
1500
1200

2.2km  1.8km  3.0km  2.2km  1.7km  2.1km  2.4km

SCHEDULE

| | 04:00 | 04:30 | 05:00 | 05:30 | 06:00 | 06:30 | 07:00 | 07:30 | 08:00 | 08:30 | 09:00 | 09:30 |
|---|---|---|---|---|---|---|---|---|---|---|---|---|
| ST00 | | | | | | | | | | | | |
| ST01 | | | | | | | | | | | | |
| ST02 | | | | | | | | | | | | |
| ST03 | | | | | | | | | | | | |
| ST04 | | | | | | | | | | | | |
| ST05 | | | | | | | | | | | | |

207

## FIG. 9E

## FIG. 9F

# FIG. 9G

| Europäisches Patentamt European Patent Office Office européen des brevets | **EUROPEAN SEARCH REPORT** | Application Number EP 16 15 0694 |
|---|---|---|

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/073686 A1 (HAMPAPUR ARUN [US] ET AL) 12 March 2015 (2015-03-12) * abstract * * paragraph [0001] - paragraph [0004] * * paragraph [0012] - paragraph [0119] * ----- | 1-19 | INV. G06Q10/04 G06Q10/06 G06Q10/10 |
| X | US 2009/112645 A1 (JHA PRATIK D [US] ET AL) 30 April 2009 (2009-04-30) * abstract * * paragraph [0001] - paragraph [0030] * * paragraph [0038] - paragraph [0065] * ----- | 1-19 | |
| A | DE 10 2005 055249 A1 (DAIMLER CHRYSLER AG [DE]) 31 May 2007 (2007-05-31) * the whole document * ----- | 1-19 | |
| | | | TECHNICAL FIELDS SEARCHED (IPC) |
| | | | G06Q |

| The present search report has been drawn up for all claims | | |
|---|---|---|
| Place of search The Hague | Date of completion of the search 15 July 2016 | Examiner Peelen, Bastien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 15 0694

This annex lists the patent family members relating to the patent documents cited in the above-mentioned European search report.
The members are as contained in the European Patent Office EDP file on
The European Patent Office is in no way liable for these particulars which are merely given for the purpose of information.

15-07-2016

| Patent document cited in search report | Publication date | Patent family member(s) | Publication date |
|---|---|---|---|
| US 2015073686 A1 | 12-03-2015 | US 2015073686 A1<br>US 2015073687 A1 | 12-03-2015<br>12-03-2015 |
| US 2009112645 A1 | 30-04-2009 | NONE | |
| DE 102005055249 A1 | 31-05-2007 | NONE | |

EPO FORM P0459

For more details about this annex : see Official Journal of the European Patent Office, No. 12/82

**EP 3 070 651 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012146256 A